# EUROPÄISCHE PATENTSCHRIFT

(11) **EP 0 660 944 B1**
(45) Veröffentlichungstag und Bekanntmachung des Hinweises auf die Patenterteilung: **16.04.1997**
(21) Anmeldenummer: 93918936.1
(22) Anmeldetag: 03.09.1993
(51) Int. Cl.: G02B 21/24, G02B 21/26

(54) **MIKROSKOP MIT EINEM MULTIFUNKTIONALEN TRIEBKNOPF**
MICROSCOPE WITH A MULTI-FUNCTION ADJUSTMENT KNOB
MICROSCOPE COMPORTANT UN BOUTON DE REGLAGE MULTIFONCTIONNEL

(30) Priorität: 19.09.1992 DE 4231379
(43) Veröffentlichungstag der Anmeldung: 05.07.1995
(73) Patentinhaber: LEICA MIKROSKOPIE UND SYSTEME GmbH, D-35530 Wetzlar (DE)
(72) Erfinder: GANSER, Michael, D-35390 Giessen (DE); FELGENHAUER, Klaus, D-35753 Greifenstein-Beilstein (DE); SCHALZ, Karl-Josef, D-35781 Weilburg (DE)
(74) Vertreter: Stamer, Harald, Dipl.-Phys.
(86) Internationale Anmeldenummer: DE9300797
(87) Internationale Veröffentlichungsnummer: WO9407172

(56) Entgegenhaltungen:
- WO-A-92/04666
- DE-C- 3 607 379
- FR-A- 2 623 299
- JP-A-61 130 914
- US-A- 4 624 537
- US-A- 4 930 882

## Beschreibung

Die Erfindung betrifft ein Mikroskop gemäß dem Oberbegriff des Patentanspruchs 1.

Bei Mikroskopen mit motorisch bzw. teilautomatisch ausgebildeten Funktionen sind die manuell auszulösenden Bedienelemente i.A. als Tasten ausgebildet und zu einem Tastenfeld zusammengefaßt. Dieses Tastenfeld ist entweder direkt am Mikroskopstativ angeordnet oder aber auch in einem separaten Bedienpult vorgesehen. Die Verwendung von Tasten zur Auslösung von diskret einzustellenden Mikroskopfunktionen, wie beispielsweise das Umschalten des Objektivrevolvers oder das Ein-/Aus-/Umschalten der einzelnen Lampen der Mikroskopbeleuchtung, erfordert keine individuell arbeitende Empfindlichkeit. Werden jedoch Mikroskopfunktionen mit Tasten bedient, bei denen eine feinfühlige Einstellung notwendig ist, wie beispielsweise die Fokussierung des Mikroskopobjektivs, die Einstelleung von Blenden, die Helligkeitregelung der Lampen oder auch die X- Y- Verschiebung des Mikroskoptisches, so sind Tasten als Bedienelemente ungeeignet.

Aus der DE 36 07 379 C1 ist ein Mikroskop mit einem motorisch schaltbaren Objektivrevolver und einem motorischen Fokussiertrieb bekannt. Die Fokussiereinrichtung weist als Handhabe zur Feineinstellung einen Drehknopf mit zugeordnetem Encoder in einem separaten, neben dem Mikroskop angeordneten Bedienpult auf. In diesem Bedienpult ist außerdem ein zusätzlicher Schalter für den Objektivrevolver vorgesehen.

Nachteilig ist an der beschriebenen Einrichtung, daß ausschließlich die motorische Fokusfeineinstellung über ein Handrad erfolgt.

Es ist daher Aufgabe der vorliegenden Erfindung, eine Einrichtung zu schaffen, bei der ausgehend von dem bekannten Triebknopf für die Fokuseinstellung, zusätzliche Mikroskopfunktionen über diesen Triebknopf gesteuert werden können.

Diese Aufgabe wird erfindungsgemäß durch die im kennzeichnenden Teil des Patentanspruchs 1 angegebenen Merkmale gelöst. Vorteilhafte Weiterbildungen der Erfindung sind Gegenstand der Unteransprüche.

Die Erfindung wird anhand eines Ausführungsbeispiels mit Hilfe der schematischen Zeichnungen näher erläutert. Es zeigen:
Fig. 1: eine Seitenansicht des Mikroskops
Fig. 2: ein Blockschaltbild der einzelnen Schaltungen

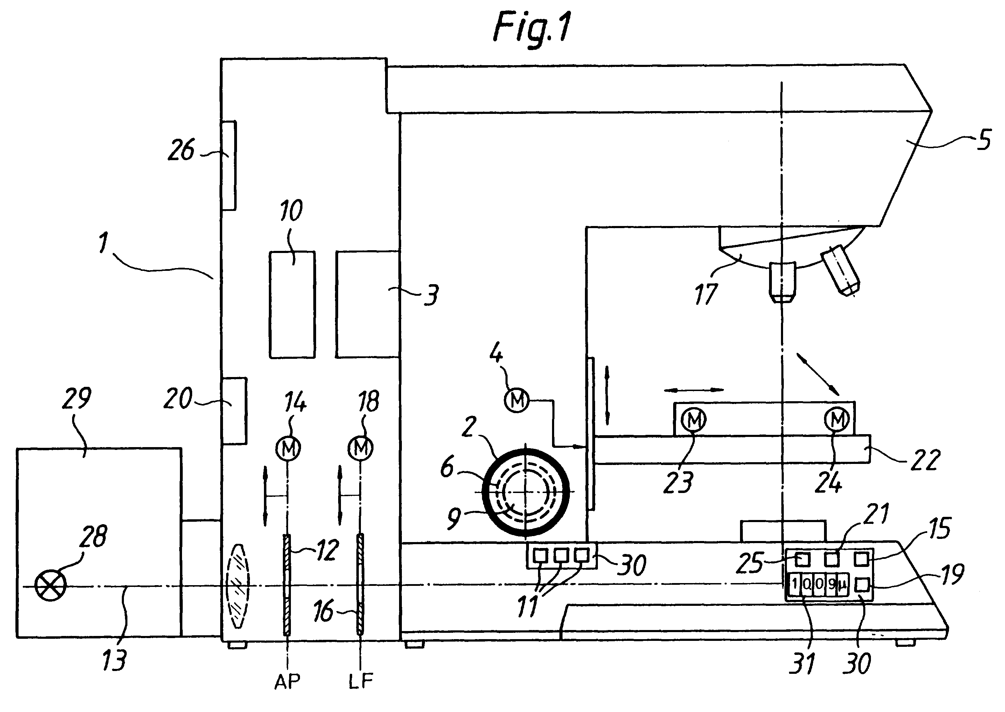

Die Figur 1 zeigt ein Mikroskop 1 mit einem Objektivrevolver 17, einen in z-Richtung motorisch verstellbaren Objekttisch 22, auf dem eine X-Y- Scanningeinrichtung mit den Antriebsmotoren 23 und 24 angeordnet ist, eine Fokussiereinrichtung mit einem Schrittmotor 4 und einem zentralen Triebknopf 2, der mit einem Encoder 6 gekoppelt ist. Bei einer langsamen oder schnelleren Drehung des Triebknopfes 2 gibt der Encoder 6 eine langsamere oder schnellere Impulsfolge ab. Eine Steuereinrichtung 3 registriert lediglich die Anzahl der Impulse.

Am Mikroskopstativ 5 sind mehrere Schalter 11;15;19;21;25 vorgesehen, die elektrisch mit der Steuereinrichtung 3 verbunden sind. Im Mikroskop 1 sind ferner eine Helligkeitsregeleinrichtung 20 für das Lampenhaus 29 mit einer Lichtquelle 28, eine Geschwindigkeitssteuerschaltung 10 für den Fokussierantrieb 4 und eine Schnittstelle 26 angeordnet. Im Beleuchtungsstrahlengang 13 des Mikroskops 1 sind in der Aperturblendenebene AP und Leuchtfeldblendenebene LF jeweils eine Blende 12;16 angeordnet, deren Öffnung über je einen Motor 14;18 veränderbar ist.

Der Triebknopf 2 mit dem nachgeordneten Encoder 6 ist elektrisch mit der Steuereinrichtung 3 verbunden. Beim Drehen des Knopfes 2 werden die vom Encoder 6 erzeugten Impulse in der Steuereinrichtung 3 registriert. Über die Steuereinrichtung 3 wird der Motor 4, vorzugsweise ein Schrittmotor, zur entsprechenden Z-Verstellung des Objektisches 22 mit Strom beaufschlagt. Die Anzahl der Encoder-Impulse bestimmt den Hub des Motors, die Anzahl der Impulse pro Zeiteinheit bestimmt die Geschwindigkeit der Motorverstellung. Dieser Z-Verstellung wird über drei Vorwahltasten 11 und eine Geschwindigkeitssteuerschaltung 10 noch eine manuell vorwählbare Geschwindigkeitskomponente überlagert, die die von der Drehung des Triebknopfes 2 abhängige Encoder-Impulsfolge vervielfacht oder untersetzt. Dies kann z.B. für die Regelung eines sanften Anlaufs der Motorsteuerung ausgenutzt werden.

Mit den Vorwahltasten 11 wird auf diese Weise ein mechanisches Übersetzungsgetriebe simuliert, d.h. der Bediener kann zur Fokussierung eines beliebigen Objektivs über eine entsprechende Geschwindigkeit die Funktion eines Fein- oder Grobtriebs vorwählen. Ein einzelner vom Encoder 6 abgegebener Impuls wird dazu beispielsweise zur Steuerung von zwei oder mehr Schritten am Motor 4 verwendet, um eine größere Übersetzung zu erreichen. Dies ist z.B. bei der Fokussierung von Objektiven geringer Vergrößerung vorteilhaft. Im Zusammenhang mit kodierten Objektivwechselvorrichtungen kann die zweckmäßige Getriebeübersetzung auch automatisch durch die Steuereinrichtung 3 erfolgen.

Dem Encoder 6 ist ein Schrittmotor 9 nachgeordnet, der elektrisch mit der Steuereinrichtung 3 und mechanisch mit der Welle des Triebknopfes 2 verbunden ist. Der Schrittmotor 9 ist als elektrisch arbeitende Bremse für den Triebknopf 2 ausgebildet. In vorgegebenen Arbeitsbereichen, z.B. im Bereich des oberen und unteren Endanschlags des Mikroskoptisches 22, ist der Schrittmotor 9 über die Steuereinrichtung 3 zunächst stromlos geschaltet und wird daher vom Triebknopf 2 ohne Behinderung mitgedreht. Beim Erreichen der Arbeitsbereichsgrenze, die z.B. durch geeignete Schwellwerte, wie maximale zulässige Impulsanzahl, definiert werden kann, wird über die Steuereinrichtung der Motor 9 bestromt. Der Triebknopf 2 läßt sich in diesem Zustand schwerer weiterdrehen. Die Steuereinrichtung 3 kann diese Funktion beispielsweise so steuern, daß die Schwergängigkeit des Triebknopfes 2 beim Erreichen der Arbeitsbereichsgrenze bis zur vollständigen Blockierung laufend erhöht wird.

Am Mikroskoptisch 22 ist eine X-Y-Scanningeinrichtung mit Antriebsmotoren 23 und 24 vorgesehen. Die X- bzw. Y-Bewegung wird ebenfalls über den Triebknopf 2 gesteuert. Dazu ist der Vorwahlschalter 25 elektrisch mit der Steuereinrichtung 3 verbunden. Beim Betätigen dieses Schalters wird beispielsweise die Funktion Z-Trieb des Triebknopfes 2 auf die Funktion X- bzw. Y-Antrieb umgeschaltet. Mit dem Triebknopf 2 lassen sich so nacheinander eine bestimmte X- und Y- Postion für ein Objekt anfahren. Die Funktion des Schrittmotors 9 bleibt analog zum Z-Trieb erhalten. Als Arbeitsbereichsgrenzen sind hier die maximalen X- und Y-Verfahrwege zugelassen.

Auch die Helligkeitsregeleinrichtung 20 für die Lichtquelle 28 ist mit der Steuereinrichtung 3 elektrisch verbunden. Über den Schalter 21 wird die Funktion Helligkeitsregelung auf den Triebknopf 2 geschaltet. Analog zu den bereits beschriebenen Funktionsweisen kann dann die Helligkeit der Lichtquelle 28 über die Encoder-Impulse des Triebknopfs 2 eingeregelt werden.

Die motorisch regelbare Apertur- 12 und und Leuchtfeldblende 16 werden über die Schalter 15 und 19 aktiviert. Die Stellmotore 14 und 18 sind elektrisch an die Steuereinrichtung 3 angeschlossen. Nach dem Aktivieren des jeweiligen Schalter 15 bzw. 19 wird über den Triebknopf 2 der Stellmotor 14 bzw. 18 gesteuert und die entsprechende Einstellung der Blende 12 bzw. 16 vorgenommen.

Bei den beschriebenen Antriebs- bzw. Stellmotoren handelt es sich jeweils um Schrittmotore, deren Ansteuerung über einzelne in der Steuereinrichtung 3 zählbare, vom Encoder 6 abgegebene Impulse erfolgt. Die Stellung der Blenden 12;16, des Mikroskoptisches 22 und der Scanningeinrichtung lassen sich über die registrierten Impulse ermitteln. Wird auf die Verwendung von Schrittmotoren verzichtet, können an den Stellantrieben Sensoren 8 angeordnet werden, die mit der Steuereinrichtung 3 elektrisch verbunden sind und die jeweilige Stellung des einzustellenden Bauteils an die Steuereinrichtung 3 übermitteln.

Am Mikroskop 1 ist zusätzlich eine Schnittstelle 26 vorgesehen, die mit der Steuereinrichtung 3 verbunden ist. Über die Schnittstelle 26 kann ein externes Bedienpult 27 zur Steuerung der beschriebenen Mikroskopfunktionen angeschlossen werden. Bei der Verwendung des Mikroskops in einem Gesamtsystem, wie beipielsweise einer Wafer-Inspektionsstation, können die Mikroskopfunktionen über die Schnittstelle auch von einer übergeordneten Steuereinrichtung vorgenommen werden.

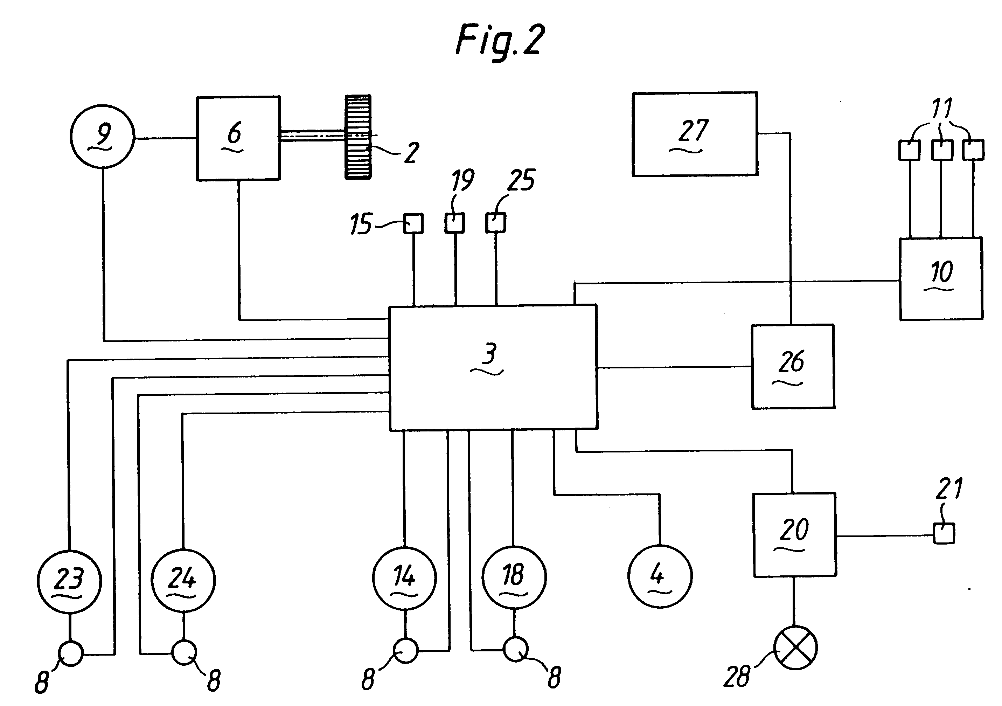

Die Figur 2 zeigt ein Blockschaltbild der einzelnen Schaltungen mit den zugehörigen elektrischen Verbindungen. An die zentrale Steuereinrichtung 3 sind die Schalter 15 und 19, sowie die Stellmotore 14 und 18 für die Apertur- 12 und Leuchtfeldblende 16 angeschlossen. Den Motoren 14 und 18 sind hier Sensoren 8 zur Überwachung der Blendenstellung zugeordnet. Der zentrale Triebknopf 2 ist über eine Welle mit dem Encoder 6 und dem nachgeordneten Schrittmotor 9 verbunden. Über Leitungen sind diese Bauteile an die Steuereinrichtung 3 angeschlossen.

Die Geschwindigkeitssteuerschaltung 10 ist mit drei Vorwahl schaltern 11 und der Steuereinrichtung 3 verbunden. Der Fokusmotors 4 ist über eine Leitung an die Steuereinrichtung 3 angeschlossen. Über die Vorwahlschalter 11 lassen sich diskrete Geschwindigkeiten, d.h. Übersetzungen für den Fokussierantrieb vorwählen. Dadurch wird erreicht, daß z.B. bei einem Objektiv mit geringer Vergrößerung durch eine Umdrehung am Triebknopf 2 ein größerer Hub des Mikroskoptisches 22 ausgelöst wird, als bei einem anderen Vorwahlschalter 11 für ein Objektiv mit hoher Vergrößerung.

Über die Helligkeitsregeleinrichtung 20 sind der Schalter 21 sowie die Lichtquelle 28 an die Steuereinrichtung 3 angeschlossen.

Die Antriebsmotore 23 und 24 für die Scanningeinrichtung sind mit Sensoren 8 zur Überwachung der X-Y-Koordinaten mit der Steuerschaltung 3 verbunden. Der Vorwahlschalter 25 zur Aktivierung der X- oder Y-Verstellung ist mit der Steuerschaltung 3 elektrisch verbunden.

An der Schnittstelle 26 der Steuereinrichtung 3 ist ein extern angeordnetes Bedienpult 27 zur Steuerung der beschriebenen Mikroskopfunktionen angeschlossen. Über das Bedienpult können die motorisch betriebenen Mikroskopfunktionen angesteuert und betrieben werden.

Die Erfindung beschränkt sich nicht nur auf die hier beschriebenen motorisch steuerbaren Mikroskopfunktionen, sondern kann in mikroskopischen Systemen überall dort eingesetzt werden, wo feinfühlige und individuell regelbare Einstellungen oder Empfindlichkeiten notwendig sind. Über den als Bremse vorgesehenen Schrittmotor 9 verhält sich der Triebknopf 2 so, als würde er in gewohnter Weise gegen einen mechanischer Anschlag laufen.

In den Figuren ist lediglich ein Triebknopf 2 dargestellt. Aus Ergonomiegründen ist es selbstverständlich auch möglich, analog zu den bekannten Fokus-Koaxialknöpfen herkömmlicher Mikroskope, einen zusätzlichen Triebknopf auf der anderen Stativseite des Mikroskops anzuordnen. Ferner kann der Triebknopf als Koaxial-Triebknopf mit einem äußeren Element für den Grobtrieb und einem inneren Element für die Feineinstellung ausgebildet sein. Beide Elemente können über ein Getriebe mit dem nachgeordneten Encoder verbunden werden.

Bei der Beschreibung des Ausführungsbeispiels ist davon ausgegangen worden, daß die den einzelnen Funktionen zugeordneten Wahlschalter als Einzelelemente gestaltet sind. Aus Montagegründen ist es jedoch besonders vorteilhaft, wenn die Schalter in Tastenfeldern 30 zusammengefaßt werden. Diese können an beliebigen, ergonomisch sinnvollen Stellen am Mikroskopstativ angeordnet und mit der Steuereinrichtung verbunden werden. Insbesondere ist so auch eine doppelte Anbringung für rechts- und linkshändige Bedienung einfach zu realisieren.

In ein solches Tastenfeld 30 kann zusätzlich ein Anzeigefeld 31 integriert werden, das die von den Sensoren 8 ermittelten Stellungen der jeweils aktivierten Antriebsmotoren sichtbar macht, bzw. die den gezählten Encoder-Impulsen entsprechenden Verfahrwege, Blendenöffnungen, Lampenströme usw. angibt. Die jeweils aktivierten Tasten können durch Leuchtsignale kenntlich gemacht werden.

### Bezugszeichenliste

- 1 -: Mikroskop
- 2 -: Triebknopf
- 3 -: Steuereinrichtung
- 4 -: Fokussiermotor
- 5 -: ftikroskopstativ
- 6 -: Encoder
- 7 -: Schalter
- 8 -: Sensoren
- 9 -: Motor (für Triebknöpfe 2)
- 10 -: Geschwindigkeitssteuerschaltung
- 11 -: Vorwahlschalter (Geschwindigkeitssteuerschaltung 10)
- 12 -: Aperturblende
- 13 -: Beleuchtungsstrahlengang
- 14 -: Stellmotor (für Aperturblende 12)
- 15 -: Schalter (Stellmotor 14)
- 16 -: Leuchtfeldblende
- 17 -: Objektivrevolver
- 18 -: Stellmotor (Leuchtfeldblende 16)
- 19 -: Schalter (Stellmotor 18)
- 20 -: Helligkeitsregeleinrichtung
- 21 -: Schalter (für Helligkeitsregeleinrichtung 20)
- 22 -: Nikroskoptisch
- 23 -: Stellmotor (für x-Verstellung von 22)
- 24 -: Stellmotor (für y-Verstellung von 22)
- 25 -: Vorwahlschalter (für Stellmotor 23 und 24)
- 26 -: Schnittstelle
- 27 -: Bedienpult
- 28 -: Lichtquelle
- 29 -: Lampenhaus
- 30 -: Tastenfeld
- 31 -: Anzeigefeld
- AP -: Aperturblendenebene
- LF -: Leuchtfeldblendenebene

## Patentansprüche

1. Mikroskop (1) mit einem motorischen Fokussierantrieb (4), einem mit einem Encoder (6) verbundenen Triebknopf (2) als Handhabe zur Fokusverstellung, mit einer Steuereinrichtung (3) zur Ansteuerung des Fokussierantriebs (4), wobei die Steuereinrichtung (3) die durch die Drehung des Triebknopfes (2) ausgelösten Encoder-Impulse zur Ansteuerung verwendet und mit weiteren Antriebsmotoren zur Steuerung von motorisch steuerbaren Mikroskopelementen, **dadurch gekennzeichnet**, daß am Mikroskopstativ (5) Schalter (7;11;15;19;21) zur wahlweisen Verbindung der Steuereinrichtung (3) mit mindestens einem der besagten Antriebsmotore (9;14;18;23;24) vorgesehen sind, so daß durch Drehen des Triebknopfes (2) wahlweise einer dieser Antriebsmotore (9;14;18;23;24) gesteuert wird.

2. Mikroskop nach Anspruch 1, **dadurch gekennzeichnet**, daß an den motorischen steuerbaren Mikroskopelementen Sensoren (8) zur Erkennung der Arbeitsstellung angeordnet und die Sensoren (8) mit der Steuereinrichtung (3) elektrisch verbunden sind.

3. Mikroskop nach Anspruch 2, **dadurch gekennzeichnet**, daß mit dem Triebknopf (2) ein elektrisch bremsbarer Motor (9) gekoppelt ist, der mit der Steuereinrichtung (3) elektrisch verbunden ist und durch diese in Abhängigkeit von der aktivierten Funktion so gesteuert wird, daß die Drehung des Triebknopfes (2) linear bis zur Blockierung erschwert wird, wenn der maximale Arbeitsbereich des motorisch steuerbaren Mikroskopelementes erreicht wird.

4. Mikroskop nach Anspruch 1 - 3, **dadurch gekennzeichnet**, daß eine Geschwindigkeitssteuerschaltung (10) für den Fokussierantrieb (4) des Mikroskops (1) vorgesehen ist und Vorwahlschalter (11) für verschiedene Übersetzungsstufen am Mikroskop (1) angeordnet sind.

5. Mikroskop nach Anspruch 1 - 3, **dadurch gekennzeichnet**, daß der Aperturblende (12) im mikroskopischen Beleuchtungsstrahlengang (13) ein Stellmotor (14) zugeordnet und am Mikroskopstativ (5) ein Schalter (15) zur Aktivierung des Motors (14) über die Steuereinrichtung (3) vorgesehen ist.

6. Mikroskop nach Anspruch 1 - 3, **dadurch gekennzeichnet**, daß der Leuchtfeldblende (16) im mikroskopischen Beleuchtungsstrahlengang (13) ein Stellmotor (18) zugeordnet und am Mikroskopstativ (5) ein Schalter (19) zur Aktivierung des Motors (18) über die Steuereinrichtung (3) vorgesehen ist.

7. Mikroskop nach Anspruch 1 - 3, **dadurch gekennzeichnet**, daß im Mikroskop (1) eine Helligkeitsregeleinrichtung (20) zur Änderung der Lampenspannung vorgesehen ist und am Mikroskopstativ (5) ein Schalter (21) zur Aktivierung über die Steuereinrichtung (3) vorgesehen ist.

8. Mikroskop nach Anspruch 1 - 3, **dadurch gekennzeichnet**, daß dem Mikroskoptisch (22) für die X- Y- Verstellung jeweils ein Stellmotor (23,24) zugeordnet ist und ein Vorwahlschalter (25) für die X- und Y-Verstellungen am Mikroskop (1) angeordnet ist.

9. Mikroskop mindestens einem der voherigen Ansprüche, **dadurch gekennzeichnet**, daß am Mikroskop (1) eine mit der Steuereinrichtung (3) elektrisch verbundene Schnittstelle (26) zur externen Steuerung der Mikroskopelemente angeordnet ist.

10. Mikroskop nach Anspruch 9, **dadurch gekennzeichnet**, daß ein externes Bedienpult (27) zur Steuerung der Mikroskopfunktionen vorgesehen und über die Schnittstelle (26) mit dem Mikroskop (1) verbunden ist.

11. Mikroskop nach mindestens einem der vorherigen Ansprüche, **dadurch gekennzeichnet**, daß die Schalter zur Aktivierung der Stellfunktionen in Tastenfeldem (3) zusammengefaßt sind.

12. Mikroskop nach Anspruch 11, **dadurch gekennzeichnet**, daß mindestens ein Tastenfeld (30) zusätzlich ein Anzeigefeld (31) enthält.

## Claims

1. Microscope (1) with a motorised focussing drive (4), a drive knob (2) connected with an encoder (6) and as handle for focus adjustment, with a control equipment (3) for the drive control of the focussing drive (4), wherein the control equipment (3) utilises the encoder pulses, which are initiated by the rotation of the drive knob (2), for the drive control and with further drive motors for the control of motor-controllable microscope elements, characterised thereby, that switches (7; 11; 15; 19; 21) for the selectable connection of the control equipment (3) with at least one of the said drive motors (9; 14; 18; 23; 24) are provided at the microscope stand (5) so that one of these drive motors (9; 14; 18; 23; 24) is selectably controlled by rotation of the drive knob (2).

2. Microscope according to claim 1, characterised thereby, that sensors (8) for the recognition of the operative setting are arranged at the motor-controllable microscope element and the sensors (8) are electrically connected with the control equipment (3).

3. Microscope according to claim 2, characterised thereby, that an electrically retardable motor (9) is coupled with the drive knob (2) and electrically connected with the control equipment (3) and so controlled by this in dependence on the activated function that the rotation of the drive knob (2) becomes harder linearly until it is blocked when the maximum operating range of the motor-controllable microscope element is reached.

4. Microscope according to claim 1 to 3, characterised thereby, that a speed control circuit (10) is provided for the focussing drive (4) of the microscope (1) and preselector switches (11) for different transmissino stages are arranged at the microscope (1).

5. Microscope according to claim 1 to 3, characterised thereby, that a setting motor (14) is associated with the aperture stop (12) in the microscope illumination ray path (13) and a switch (15) for the activation of the motor (14) by way of the control equipment (3) is provided at the microscope stand (5).

6. Microscope according to claim 1 to 3, characterised thereby, that the light field stop (16) in the microscope illumination ray path (13) is associated with a setting motor (18) and a switch (19) for the activation of the motor (18) by way of the control equipment (3) is provided at the microscope stand (5).

7. Microscope according to claim 1 to 3, characterised thereby, that a brightness-regulating equipment (20) for variation of the lamp voltage is provided in the microscope (1) and a switch (21) for activation by way of the control equipment (3) is provided at the microscope stand (5).

8. Microscope according to claim 1 to 3, characterised thereby, that a respective setting motor (23, 24) for each of the X and the Y displacements is associated with the microscope stage (22) and a preselector switch (25) for the X and Y displacements is arranged at the microscope (1).

9. Microscope according to at least one of the preceding claims, characterised thereby, that an interface (26), which is electrically connected with the control equipment (3), for the external control of the microscope is arranged at the microscope (1).

10. Microscope according to claim 9, characterised thereby, that an external control desk (27) is provided for the control of the microscope functions and connected by way of the interface (26) with the microscope (1).

11. Microscope according to at least one of the preceding claims, characterised thereby, that the switches for the activation of the setting functions are assembled in key fields (3).

12. Microscope according to claim 11, characterised thereby, that at least one key field (30) additionally contains a display field (31).

## Revendications

1. Microscope (1) avec un actionnement motorisé (4) de la mise au point, un bouton de réglage (2) relié à un codeur (6) pour la manipulation de l'ajustement de la mise au point, avec un système de commande (3) pour la commande de l'actionnement de mise au point (4), où le système de commande (3) utilise les impulsions du codeur déclenchées par la rotation du bouton de réglage (2) pour la commande et avec d'autres moteurs d'actionnement pour le réglage d'éléments de microscope réglables par un moteur, caractérisé en ce que sur le pied du microscope (5) sont prévus des commutateurs (7; 11; 15; 19; 21) pour la liaison au choix du système de commande (3) avec au moins l'un desdits moteurs d'actionnement (9; 14; 18; 23; 24) de manière que, par rotation du bouton de réglage (2), un de ces moteurs d'actionnement (9; 14; 18; 23; 24) soit commandé au choix;

2. Microscope selon la revendication 1, caractérisé en ce que sur les éléments de microscope pouvant être commandés par un moteur sont agencés des capteurs (8) pour la reconnaissance de la position de fonctionnement et les capteurs (8) sont électriquement reliés au système de commande (3).

3. Microscope selon la revendication 2, caractérisé en ce qu'au bouton de réglage (2) est couplé un moteur électrique freinable (9) qui est relié électriquement au système de commande (3) et est ainsi commandé selon la fonction activée de façon que la rotation du bouton de réglage (2) soit linéairement de plus en plus dure jusqu'au blocage quand la plage maximale de fonctionnement de l'élément de microscope pouvant être commandé par moteur est atteinte.

4. Microscope selon la revendication 1-3, caractérisé en ce qu'un circuit de réglage de la vitesse (10) pour l'actionnement de la mise au point (4) du microscope (1) est prévu et des présélectionneurs (11) sont agencés sur le microscope pour diverses étapes de transmission.

5. Microscope selon la revendication 1-3, caractérisé en qu'au diaphragme d'ouverture (12) est affecté, dans le trajet des rayons d'éclairage (13) du microscope, un moteur d'ajustement (14) et sur le pied (5) du microscope est prévu un commutateur (15) pour actionner le moteur (14) par l'intermédiaire du système de commande (3).

6. Microscope selon la revendication 1-3, caractérisé en ce qu'au diaphragme du champ lumineux (16) est affecté dans le trajet des rayons d'éclairage (13) du microscope, un moteur de réglage (18) et en ce qu'est prévu sur le pied (5) du microscope, un commutateur (19) pour activer le moteur (18) par l'intermédiaire du système de commande (3).

7. Microscope selon la revendication 1-3, caractérisé en ce que dans le microscope est prévu un système de réglage (20) de la luminosité pour la modification de la tension de lampe et sur le pied (5) du microscope est prévu un commutateur (21) pour son activation par l'intermédiaire du système de commande (3).

8. Microscope selon la revendication 1-3, caractérisé en ce qu'à la table (22) du microscope pour le déplacement sur X et Y est affecté un moteur d'ajustement (23, 24) et un présélectionneur (25) est agencé sur le microscope (1) pour le déplacement sur X et Y.

9. Microscope selon au moins l'une des revendications précédentes, caractérisé en ce que sur le microscope (1) est agencé une interface (26) reliée électriquement au système de commande (3) pour la commande externe des éléments du microscope.

10. Microscope selon la revendication 9, caractérisé en ce qu'un pupitre externe (27) est prévu pour la commande des fonctions du microscope, qui est relié par l'interface (26) au microscope (1).

11. Microscope selon au moins l'une des revendications précédentes, caractérisé en ce que les commutateurs pour activer les fonctions d'ajustement sont rassemblées dans le clavier (3).

12. Microscope selon la revendication 11, caractérisé en ce qu'au moins un clavier (30) contient de plus un affichage (31).
